# EUROPEAN PATENT APPLICATION

(11) **EP 0 974 785 A1**
(43) Date of publication of application: **26.01.2000**
(21) Application number: 98305786.0
(22) Date of filing: 21.07.1998
(51) Int. Cl.: F21V 8/00

(54) **Illuminator**

(71) Applicant: Combined Optical Industries Limited, Slough, Berkshire SL1 4DW (GB)
(72) Inventor: Gibson, Desmond, Uxbridge, UB8 2LU (GB); Lewis, Richard, Hemel Hempstead, Hertfordshire HP1 2NB (GB); Hanney, Michael, Thorpe, Surrey, TW20 8TA (GB)
(74) Representative: Curtis, Philip Anthony

(57) **Abstract**

A back lighter (14) for illuminating a display (12) in electrical equipment, especially portable electrical equipment such as mobile telephones. The back lighter (14) comprises two light emitting diodes (26), two focussing elements (18), each of which is arranged to collect light from a respective one of the light emitting diodes (26), and a substantially planar light guide (20) arranged to receive light from the focussing elements (18). Each focussing element (18) is adapted to bend the light from the light emitting diode (26) into or towards the plane of the light guide (20). This arrangement enables the thickness of the light guide (20) to be under 0.7 mm.

## Description

This invention relates to a backlighter for illuminating a display. More particularly the invention relates to a backlighter for illuminating a liquid crystal display (LCD), especially for portable personal devices.

Back lighters are known for illuminating the display of many different types of articles, including mobile telephones, calculators, clocks, watches, etc. In general, such back lighters comprise a light source and a light guide for guiding the light from the light source to an area below the liquid crystal display. The light guide is adapted to reflect the light towards the liquid crystal display.

In the illumination of the display of portable electrical equipment, such as mobile telephones, it is particularly important to minimise the size and the power requirements of the back lighter. A reduction in the size of the back lighter can make it possible to reduce the overall size of the equipment. A reduction in the power requirements can prolong the life of the power source for the equipment.

We have now found a way to reduce both the size and the power requirements of a back lighter. Broadly, we achieve this by providing a back lighter comprising a light source, light collection means arranged to receive light from the light source, and a substantially planar light guide arranged to receive light from the light collection means. Broadly, the light collection means is arranged to focus the light from the light source into the light guide, and is arranged to bend light from the light source into or towards the plane of the light guide in order to reduce the loss of light through the surface of the light guide. This makes it possible to reduce the thickness of the light guide and to reduce the power requirements of the back lighter.

The provision of a light collection means which bends the light into the plane of the light guide improves retention of the light within the light guide, owing to a greater amount of total internal reflection taking place within the light guide.

The light source comprises at least one light emitting diode. Most prior art back lighters for mobile telephones contain four light emitting diode units. In the present invention it would be possible to use four or more light emitting diodes, but we prefer to use fewer than four light emitting diodes in order to reduce the power requirements. It will normally be desirable to use more than one light emitting diode, as there may be difficulties in generating sufficient light. In general, we prefer to use two or three light emitting diodes, with two being most preferred

It is a feature of the invention that the light guide has a thickness below 1 mm. We prefer the light guide to have a thickness less than or equal to 0.7 mm, more preferably less than or equal to 0.6 mm. In general, the thickness of the light guide will not be below 0.4 mm. Most preferably the thickness of the light guide is substantially 0.5 mm.

Preferably, each light emitting diode is disposed within a light emitting diode unit which has a built-in reflector that is designed to narrow the light beam emitted from the unit. The configuration of the light emitting diode unit is such that the light beam is emitted in a conical form in which the angle between a line on the surface of the cone, and intersecting the vertex, and the longitudinal axis of the cone is less than or equal to 90°. This angle is preferably from 70° to 80°, and is most preferably substantially 75°. The angle will usually be at least 60°.

Desirably, the light guide has a spatially optimised texture to provide even illumination along the length thereof. Typically the light guide comprises a clear polycarbonate or acrylic material - a suitable material is available from Bayer under the trade name MAKROLON.

The optimised texture can be created by the provision of a plurality of surface formations over the surface of the light guide. It is particularly advantageous that the density of the surface formations (ie the number of the surface formations per unit area of the surface) varies over the surface of the sheet, in a direction away from the light source. The density of the surface formations affects the amount of light scattered through the sheet towards to display. Thus, the variation in the density of the surface formations makes it possible to compensate for unevenness in illumination caused by having the light source disposed along an edge of the light guide.

The or each focussing element includes a light input surface through which light is received from the light emitting diode. We prefer that the light input surface is curved. The provision of the curved surface assists in focussing the light into the plane of the light guide. When there are two focussing elements, we prefer that the light input surfaces of each focussing element are arranged at an angle of 20° to 30°, most preferably substantially 23°, to one another. Furthermore, the light emitting diode units are preferably arranged so that the light from the light emitting diodes is normal to, or close to normal to, the light input surface of one of the focussing elements. This means that the light emitting diode units are angled towards one another in order to spread the light across the light guide.

Typically the light guide comprises an upper surface, a lower surface, two side faces and a front and rear face. In the preferred embodiment, the liquid crystal display can be arranged above the upper surface and the focussing elements can be provided on or near to the front face, and on or near one of the side faces. It is preferred that the focussing elements are configured so that they direct light towards the centre of the light guide, rather than towards the side faces thereof.

Each focussing element preferably comprises an upper surface and a lower surface, the light input surface extending between the upper and lower surfaces. The lower surface of the focussing elements is preferably in the same plane as the lower surface of the light guide, while the upper surface of the focussing elements is preferably substantially planar and is arranged at an angle to the plane of the upper surface of the light guide, whereby the thickness of the focussing elements decreases from the light input surface to the light guide. The angle between the upper surface of the focussing elements and the upper surface of the light guide is preferably 5° to 10°, most preferably substantially 6.5°. In general, we prefer than the light guide is integrally formed with the focussing elements.

Each focussing element is preferably configured such that the length of the part of upper surface of the focussing element adjacent to the light input surface is less than the length of the part of the upper surface of the focussing element that is adjacent to the upper surface of the light guide.

Each focussing element preferably has first and second side faces which extend between the upper and lower surfaces of thereof and which extend between the light input surface and the light guide. The first of the side faces is preferably co-planar with one of the side faces of the light guide. The second of the side faces is preferably at an angle of 40° to 50°, most preferably substantially 45° to the first side face, so that the first and second side faces diverge in a direction away from the light input surface.

The light source, the light collection means and the light guide may conveniently be secured to a printed circuit board (PCB). The printed circuit board would usually provide the light source with the electrical power needed to light the light emitting diodes.

A backing card may also be provided underneath the light guide. The backing card would typically be disposed between the printed circuit board and the light guide. The backing card is preferably white.

According to another aspect of the invention there is provided a back lighter for illuminating a display, comprising a light source, light collection means arranged to receive light from the light source, and a light guide arranged to receive light from the light collection means, wherein the light source comprises at least one light emitting diode, the light collection means comprises at least one focussing element, and wherein the thickness of the light guide is less than 0.7 mm.

The back lighter according to this aspect of the invention may be provided with any combination of the features of the back lighter described above.

According to another aspect of the invention there is provided a back lighter for illuminating a display, comprising a light source, light collection means arranged to receive light from the light source, and a light guide arranged to receive light from the light collection means, wherein the light source comprises exactly two light emitting diodes, the light collection means comprises exactly two focussing elements, each focussing element being arranged to collect light from a respective one of the light emitting diodes.

The back lighter according to this aspect of the invention may be provided with any combination of the features of the back lighter described above.

According to another aspect of the invention there is provided a liquid crystal display unit comprising a liquid crystal display and a back lighter as described above, the liquid crystal display being arranged adjacent the back lighter, whereby the liquid crystal display can be illuminated by the light guide of the back lighter.

Advantageously, the liquid crystal display is provided with a recess which receives the part of the focussing elements therein. This feature enables the focussing elements to be accommodated within the liquid crystal display unit without having an adverse effect on the overall size of the unit.

The liquid crystal display unit according to the invention can be used in any article that normally includes a liquid crystal display such as mobile telephones, calculators, clocks, watches, etc. The liquid crystal display unit according to the invention is of particular use in portable personal electronic devices, especially mobile telephones.

According to another aspect of the invention there is provided a mobile telephone comprising a casing having a display, a keypad, a speaker and a microphone provided therein, wherein the display comprises a liquid crystal display unit as described above.

The small size of the back lighter according to the invention allows the size of mobile telephones, calculators, etc. to be reduced without any reduction of the display quality. The low power requirements of the back lighter according to the invention extends the life of the batteries used to power mobile telephones, calculators etc.

Reference is now made to the accompanying drawings, in which:
Fig. 1 is an exploded perspective view of a liquid crystal display unit according to the invention;
Fig. 2 is an exploded perspective view of the liquid crystal display unit shown in Fig. 1, looking from a different direction to Fig. 1;
Fig. 3 is a cross-sectional view of the liquid crystal display unit shown in Figs. 1 and 2;
Fig. 4 is an underside view of a light guide for use in the liquid crystal display unit according to the invention;
Fig. 5 is a view on lines 5-5 of Fig. 4; and
Fig. 6 is a cross-sectional view of part of the liquid crystal display unit shown in Figs. 1 to 3.

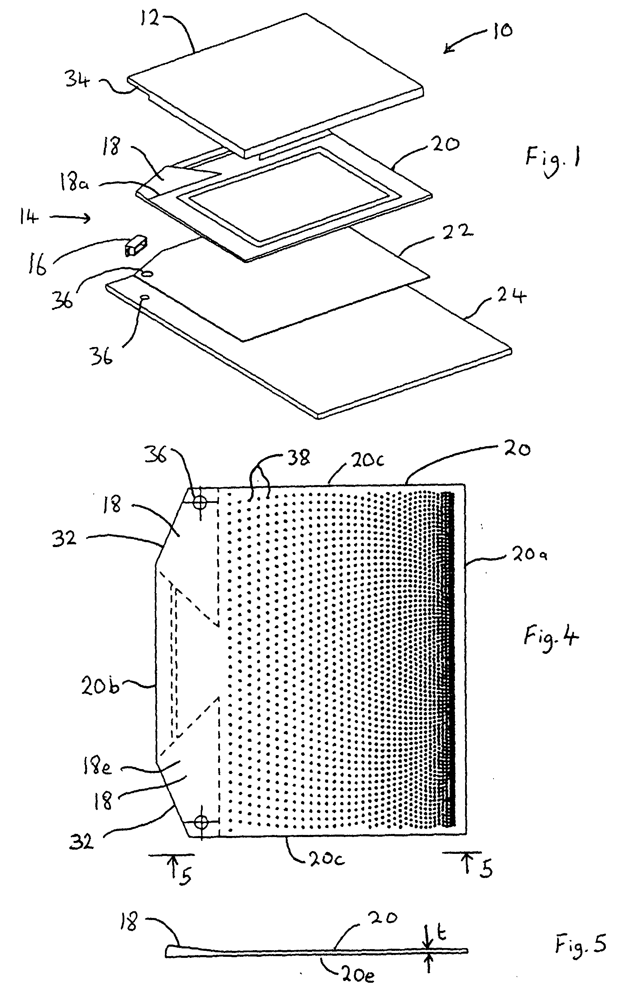

In the drawings a liquid crystal display unit is generally designated 10. It will be observed that the scale in which the liquid crystal display unit 10 is depicted in Figs. 1 to 6 varies from drawing to drawing.

The liquid crystal display unit 10 comprises a liquid crystal display 12 in combination with a back lighter according to the invention, which is generally designated 14. The liquid crystal display 12 is arranged on top of the back lighter 14, so that the underside of the liquid crystal display 12 is in contact with an upper surface of the back lighter 14.

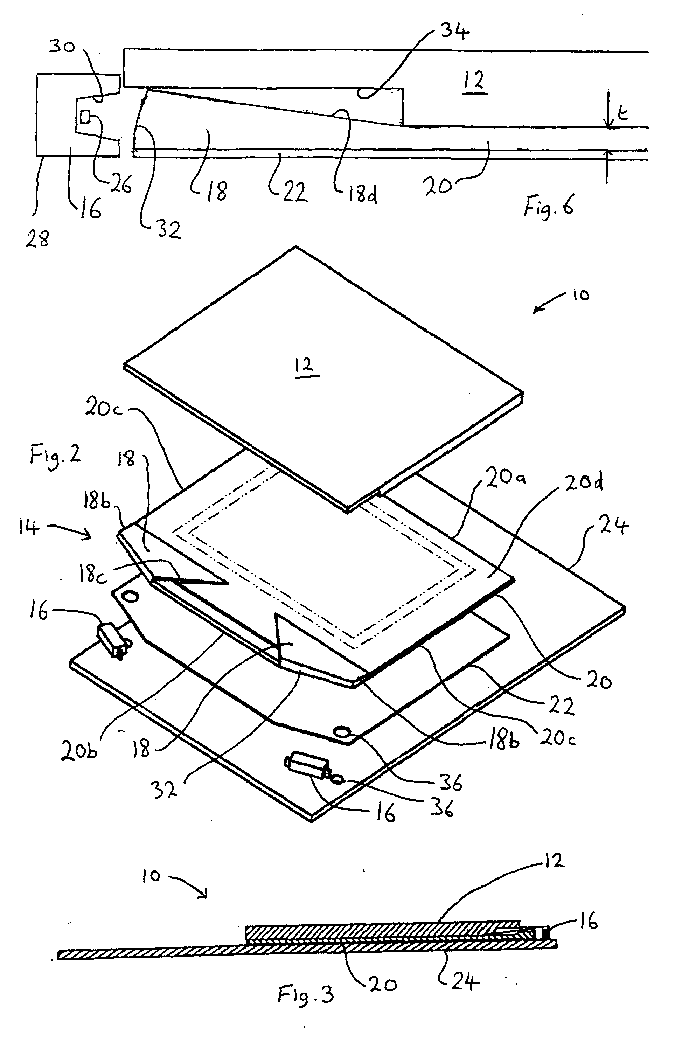

The back lighter 14 comprises a light source in the form of two light emitting diode units 16, a light collection means in the form of two focussing elements 18, and a planar light guide 20. The back lighter 14 further includes a white backing card 22 (for clarity, the backing card is not shown in Fig. 3) and a printed circuit board 24.

Each light emitting diode unit 16 comprises a light emitting diode 26 which generates light. Each light emitting diode 26 is housed in a housing 28 which has an intemal reflective surface 30. The reflective surface 30 serves to reflect light outwardly from the light emitting diode unit 16 to the focussing elements 18. The light emitting diode units 16 were specially selected for a narrow beam angle and low power consumption. The units 16 generate a conical beam of light in which the angle between the cone surface and the longitudinal axis of the cone is about 120°. The type of light emitting diode unit sold by Siemens under the trade name Mini SideLED is particularly suitable.

The focussing elements 18 are integrally formed with the light guide 20. Both the focussing elements 18 and the light guide 20 are made of a clear polycarbonate material. A polycarbonate sold by Bayer under the trade name MAKROLON is particularly suitable, owing to its high melting point.

The light emitting diode units 16 are arranged so that the light path of the light leaving the units 16 are intersecting, i.e., the units are angled towards one another.

The focussing elements 18 each have a light input surface 32 through which light is received from the light emitting diodes 26; as will be seen from Fig. 6, the light input surface 32 is curved. The focussing elements 18 are configured to bend the light received from the light emitting diodes 26 towards or into the plane of the light guide 20. Thus, in general, there is a low angle between the light paths within the light guide 20 and the surfaces of the light guide 20. This means that much of the light within the light guide 20 can be reflected off the inner surfaces thereof by total internal reflection, thereby reducing undesirable losses of light during its passage along the light guide 20. It will be appreciated that there will still be some losses of light through the surface of the light guide 20 and the focussing elements 18, but these losses are relatively small compared with the amount of light that is retained. Furthermore, as discussed in detail below, some light is required to be directed upwardly towards the liquid crystal display 12.

The light input surfaces 32 of the two focussing elements 18 are arranged at an angle to one another of about 23°. This feature is provided to align each focussing element 18 with a respective one of the light emitting diode units 16.

The light guide 20 comprises a planar sheet having a rear face 20a, a front face 20b, two side faces 20c, and upper surface 20d and a lower surface 20e. The focussing elements 18 are integrally formed with the light guide 20 and comprise a rear face, which is integral with the light guide 20 and intersects the light guide 20 along an edge 18a, the light input surface 32, first and second side faces 18b and 18c respectively, an upper surface 18d and a lower surface 18e. The lower surface 18e is substantially coplanar with the lower surface 20e. The upper surface 18a is at an angle of about 6.5° to the plane of the upper surface 20e. The first side face 18b is substantially coplanar with the side face 20c. The first side face 18b is at an angle of about 45° to the second side face 18c, whereby the edge 18a is of greater length than the light input surface 32. This arrangement helps to direct the light towards the centre of the light guide 20 and away from the side faces 20c of the light guide 20.

The light guide 20 is designed to spread the light evenly across the liquid crystal display 12. The thickness t of the light guide 20 is only about 0.5 mm, which helps to minimise the size of the liquid crystal display unit 10. The thickness of the focussing elements 18 is greatest at the part nearest to the light emitting diode units 16, i.e., in the region closest to the light input surfaces 32. This thickness decreases gradually towards the light guide 20. The liquid crystal display 12 is provided with a cut-out recess 34 which accommodates the extra thickness in the focussing elements 18. The recess 34 ensures that the liquid crystal display unit 10 does not need to be made any larger in order to accommodate the focussing elements 18.

The light guide 20 is provided with a plurality of surface formations 38 designed to reflect and scatter the light from the light emitting diodes 26 upwardly towards the liquid crystal display 12. The formations 38 are provided on the lower surface of the light guide 20, i.e., the surface that engages the backing card 22. The density of the formations 38 increases in a direction away from the light emitting diodes 26, so that the maximum density exists near the rear face 20a of the light guide 20 which is furthest away from the light emitting diodes 26. This feature helps to provide an even light density over the whole surface of the liquid crystal display 12. This feature is particularly important because the use of only two light emitting diodes 26 means that it is not possible to input light to all four corners of the light guide 20. Without this feature there may be difficulties in avoiding a perceptible gradual reduction in light intensity along the light guide 20 in a direction away from the light emitting diodes 26.

The light guide 20 is mounted to the white backing card 22 which is, in tum, mounted to the printed circuit board 24. The light emitting diode units 16 are also mounted to the printed circuit board 24. The printed circuit board 24 delivers power to the light emitting diodes 26 and controls the display on the liquid crystal display 12. Fixing holes 36 are proved to enable the components to be screwed or rivetted together.

The purpose of the backing card 20 is to hide the printed circuit board 24 from view. It will be appreciated that the backing card 22 need not necessarily be white, although white will usually be preferred in order to optimise the brightness. Another means of concealing the printed circuit board 24 could be used instead of the backing card 22; for example, an opaque, preferably white, coating could be provided on the underside of the light guide 20.

It will be appreciated that further modifications may be made to the invention described above.

## Claims

1. A back lighter (14) for illuminating a display (12), comprising a light source, light collection means arranged to receive light from the light source, and a substantially planar light guide (20) arranged to receive light from the light collection means, wherein light guide (20) is adapted to be arranged adjacent to, and to illuminate, the display, the light source comprises at least one light emitting diode (26), the light collection means comprises at least one focussing element (18), the or each focussing element (18) being arranged to collect light from a respective one of the or each light emitting diode (16) and being adapted to bend light from the light emitting diode (16) into or towards the plane of the light guide (20).

2. A back lighter (14) according to claim 1, wherein the thickness of the light guide (20) is less than or equal to 0.7 mm.

3. A back lighter (14) according to claim 1 or 2, wherein the thickness of the light guide (20) is at least 0.4 mm.

4. A back lighter (14) according to claim 1, wherein the thickness of the light guide (20) is substantially 0.5 mm.

5. A back lighter (14) according to any preceding claim, wherein there are exactly two light emitting diodes (26) and exactly two focussing elements (18).

6. A back lighter (14) according to any preceding claim, wherein the or each light emitting diode (26) is provided in a respective light emitting diode unit (16), and the or each light emitting diode unit (16) contains a reflector (30) adapted to produce narrow a light beam therefrom.

7. A back lighter (14) according to claim 5 and 6, wherein the light emitting diode units (16) are angled towards one another, whereby the path of the light beams from the light emitting diodes (26) intersects at a point spaced from the light emitting diode units (16).

8. A back lighter (14) according to any preceding claim, wherein the surface of the light guide (20) is textured in order to provide substantially even illumination along the length thereof.

9. A back lighter (14) according to claim 8, wherein said textured surface comprises a plurality of surface formations (38) provided on a surface of the light guide (20), which are adapted to reflect the light from the light source towards the display (12), and wherein the density of said surface formations (38) increases along at least part of the light guide (20) in a direction away from the light source.

10. A back lighter (14) according to any preceding claim, further comprising a printed circuit board (24) to which the light source, the light collection means and the light guide (20) are secured, and a backing card (22) disposed between the printed circuit board (24) and the light guide (20).

11. A back lighter according to any preceding claim, wherein the or each focussing element (18) is provided with a curved light input surface through which light is received from the light emitting diode (16).

12. A back lighter according to any preceding claim wherein the or each focussing element comprises an upper surface and a lower surface, the lower surface being in the same plane as a lower surface of the light guide, and the upper surface being substantially planar and being arranged at an angle to the plane of the upper surface of the light guide, whereby the thickness of the or each focussing element decreases along its length.

13. A liquid crystal display unit (10) comprising a liquid crystal display (12) and a back lighter (14) according to any preceding claim, wherein the liquid crystal display (12) is adjacent the back lighter, whereby the liquid crystal display (12) can be illuminated by the light guide (20) of the back lighter (14).

14. A liquid crystal display unit (10) according to claim 13, wherein the liquid crystal display (12) is provided with a recess (34) which receives the part of the focussing elements (18) therein.

15. A mobile telephone comprising a casing having a display, a keypad, a speaker and a microphone provided therein, wherein the display comprises a liquid crystal display unit (10) according to claim 13 or 14.
